# EUROPEAN PATENT APPLICATION

(11) **EP 2 546 146 A1**
(43) Date of publication of application: **16.01.2013**
(21) Application number: 12176028.4
(22) Date of filing: 11.07.2012
(51) Int. Cl.: B64D 11/06

(54) **Active seat back for aircraft**

(30) Priority: 12.07.2011 US 201161506689 P
(71) Applicant: Zodiac Aerospace, 36100 Issoudun (FR)
(72) Inventor: Islam, Rakibul, Rancho Cucamonga, CA California 91730 (US); Obadia, Jean-Marc, 38300 Maubec (FR); Trimble, Robert, Gainsville, TX Texas 76240 (US); Flores Aguirre, Raul, CP31238 Chihuahua Chihuahua (MX); Quatanens, Frederic, 36100 Issoudun (FR); Cailleteau, Jeremy, 36120 St. Aout (FR); Gaudin, Jeremy, 36250 Saint-Maur (FR); Martinez, Virgile, 36100 Segry (FR)
(74) Representative: Phillips & Leigh

(57) **Abstract**

Described are active seat, energy absorbing, backs (10) for a passenger seat having a seat back (16) with a first pivot location, at least one active system (12) coupled to the pivot location, and at least one sensing circuit (14) electrically connected to the at least one active system and arranged to monitor for crash scenarios and to transmit a signal to the at least one active system when such a scenario is detected; a head rest (24) may coupled to the passenger seat back (16) and comprise a second pivot location (22): in use, the passenger seat back or the seat back and head rest or the head rest may be rotated aft when the at least one active system receives the signal from the at least one sensing circuit.

## Description

### FIELD OF THE INVENTION

The invention relates to active, energy absorbing, seat backs for passenger seats or the like.

### BACKGROUND

In various modes of transportation, many passenger seats are at least partially surrounded by walls or monuments or may be placed behind other passenger seats where items are mounted to the seat back, such as video displays, telephones, shrouds, or other items.

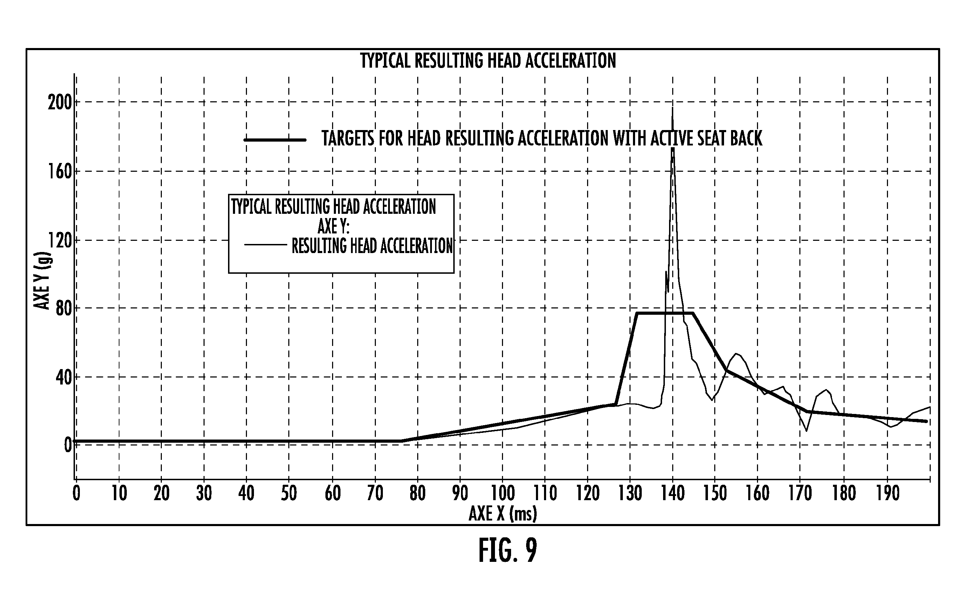

During a minor crash landing, a passenger may be thrown forward so that the passenger's head and/or body strikes these structures due to inertial loads from the event. Typically, these structures are rigid in nature, so as not to provide any energy absorbing or deflecting features. As a result, Figure 9 shows typical head acceleration data on conventional seat back designs, which is a measure of the likelihood of a head injury arising from an impact or Head Injury Criterion ("HIC"). As is shown in Figure 9, the higher spikes represent a greater danger of head injury. The current method to address HIC risks has been primarily through spacing to eliminate contact with the structures during the dynamic event. See 14 C.F.R. § 25.562 and SAE AS 8049B. [Federal Aviation Regulations - Emergency Landing Dynamic Conditions].

Thus, it may be desirable to provide internal structures with energy absorbing and/or energy deflecting features within a potential strike zone to reduce and/or control the amount of head acceleration a passenger experiences during a minor crash.

### STATEMENT OF INVENTION

An active, energy absorbing, seat back for passenger seats and features thereof in accordance with the present invention is defined by the appended claims.

### SUMMARY

Features of the present invention include an active, energy absorbing, seat back for a passenger seat comprising a seat back comprising a pivot location, at least one active system coupled to the pivot location, and at least one sensing circuit electrically connected to the at least one active system, wherein the at least one sensing circuit comprises integrated logic to monitor for crash scenarios and to transmit a signal to the at least one active system when such a scenario is detected. The passenger seat back may be rotated aft when the at least one active system receives the signal from the at least one sensing circuit.

In certain features, the at least one active system may be configured to provide translational movement and may further comprise an inflator. The at least one active system may be coupled to a connector that is configured to convert the translational movement into rotational movement, such as a crankshaft or a linear actuator and gear.

Features of the present invention may also include an active seat back for a passenger seat comprising a seat back comprising a first pivot location, a head rest coupled to the passenger seat back and comprising a second pivot location, at least one active system coupled to the first and second pivot locations, and at least one sensing circuit electrically connected to the at least one active system, wherein the at least one sensing circuit comprises integrated logic to monitor for crash scenarios and to transmit a signal to the at least one active system when such a scenario is detected. The passenger seat back and the head rest may be rotated to aft positions when the at least one active system receives the signal from the at least one sensing circuit.

According to certain features, the active seat back may be deployed by sensing that a crash has occurred, transmitting a signal to the at least one active system, and rotating the passenger seat back aft. A head rest may be coupled to the passenger seat back, wherein the step of rotating the passenger seat back aft further comprises rotating the head rest aft. The method may further comprise the step of moving the at least one active system.

### BRIEF DESCRIPTION OF THE DRAWINGS

Figure 1 is a side view showing a passenger seat with an active seat back according to certain features of the present invention in a normal position.
Figure 2 is a side view of the passenger seat of Figure 1 with the active seat back deployed.
Figure 3 is a side view of the passenger seat of Figure 1 showing normal and deployed positions by the active seat back.
Figure 4 is a side view of the passenger seat of Figure 1 showing rotational direction of a head rest by the active seat back.
Figure 5 is a side view of the passenger seat of Figure 1 showing rotational direction of a seat back the active seat back.
Figure 6 is a perspective view of an active system according to certain features of the present invention configured to provide translational movement and coupled to a linear actuator and gear.
Figure 7 is a perspective view of an active system according to certain features of the present invention configured to provide translational movement and coupled to a crankshaft.
Figure 8 is a side schematic of the active system of Figure 7 showing rotational movement of the crankshaft.
Figure 9 is a graph showing projected reductions in head accelerations on seat back designs that incorporate active seat backs within potential head strike zones.

### DETAILED DESCRIPTION

The described features of the invention provide active seats for passenger seats. While the active seats are discussed for use with aircraft seats, they are by no means so limited. Rather, features of the active seats may be used in passenger seats or other seats of any type or otherwise as desired.

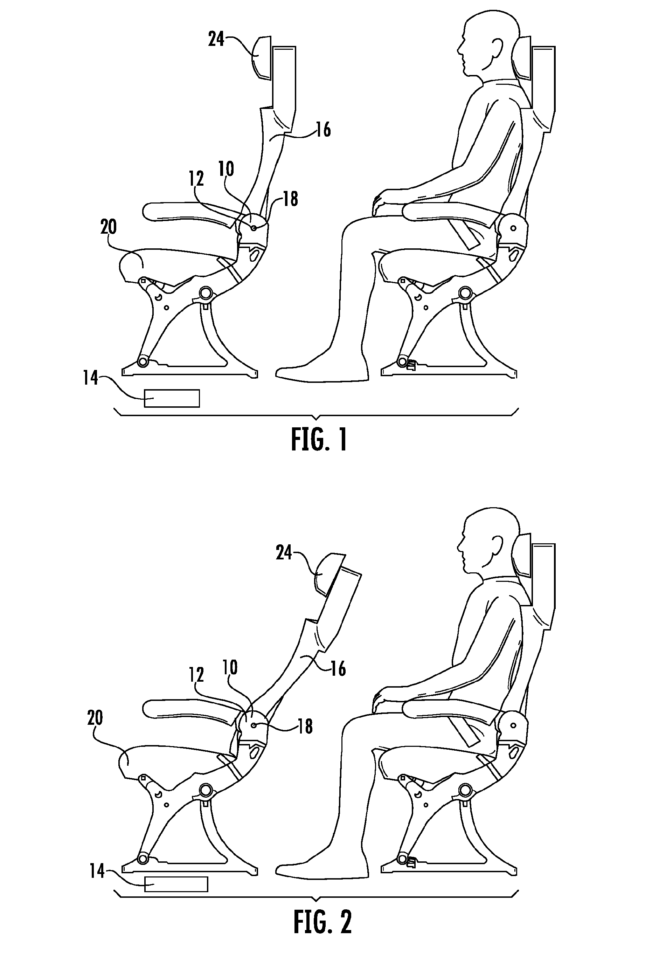

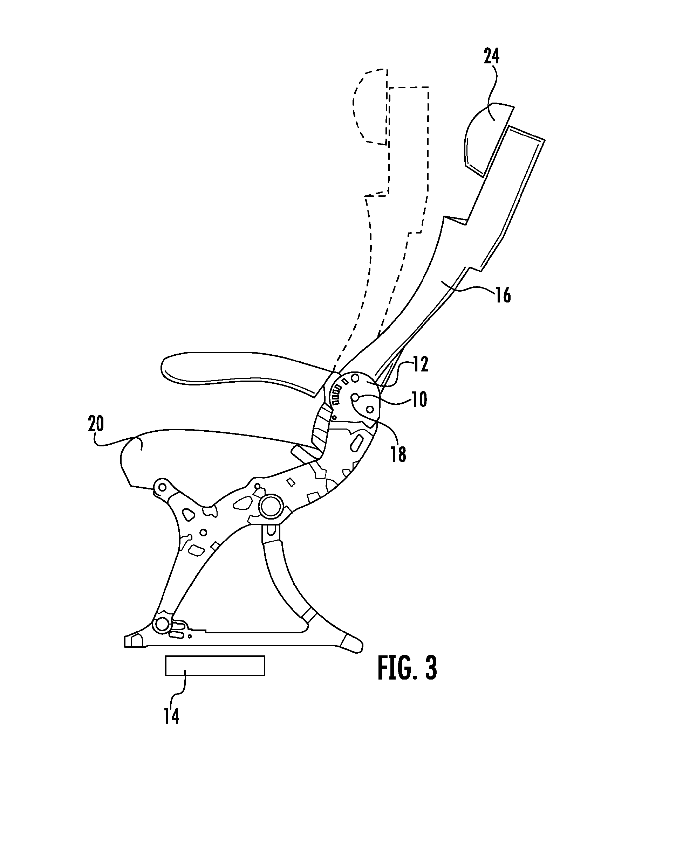

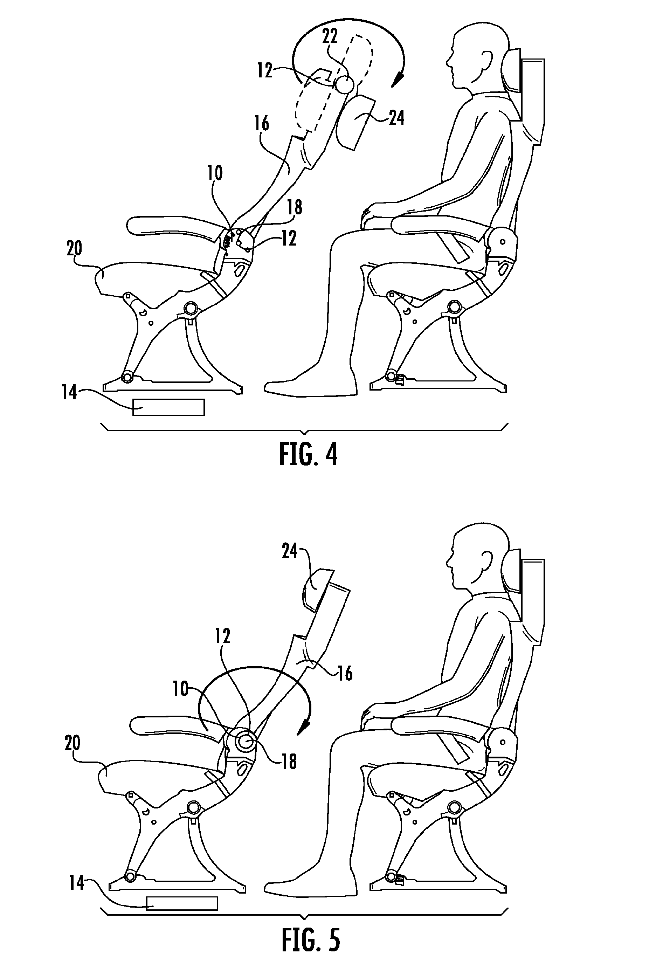

Figures 1-8 illustrate features of an active, energy absorbing, seat back 10. In these features, the active seat 10 comprises at least one active system 12, at least one sensing circuit 14, and a seat back 16.

The active system 12 may be coupled to a pivot location 18 of the seat back 16. The pivot location 18 may be positioned adjacent the location where the seat back 16 couples to a seat pan 20. In other features, the seat back 16 may comprise a pivot location 18 that is positioned above the location where the seat back 16 couples to the seat pan 20. For example, the seat back 16 may be configured to maintain a fixed position relative to the seat pan 20 during normal operation, but may include an emergency pivot location 18 for use during crashes. One of ordinary skill in the relevant art will understand that the pivot location 18 may be positioned in any suitable location in the seat back 16.

In certain features, the active system 12 and/or an additional active system 12 may be coupled to a second pivot location 22 adjacent a head rest 24 of the seat back 16.

In these features, the active system 12 may comprise any type of system that is configured to rotate the pivot location 18 and/or 22 and thereby cause an aft rotation of the seat back 16 and/or head rest 24. For example, the active system 12 may comprise a pre-stress system, a compressed spring, an electric motor, a pyrotechnic gas inflator, a cold gas inflator, or other suitable system.

In some features, the active system 12 may comprise a rotational movement design, such as where the active system 12 is an electric motor or other rotational movement device. In these features, the active system 12 may be coupled directly to the pivot location 18 and/or 22 so as to cause an aft rotation of the seat back 16 and/or head rest 24.

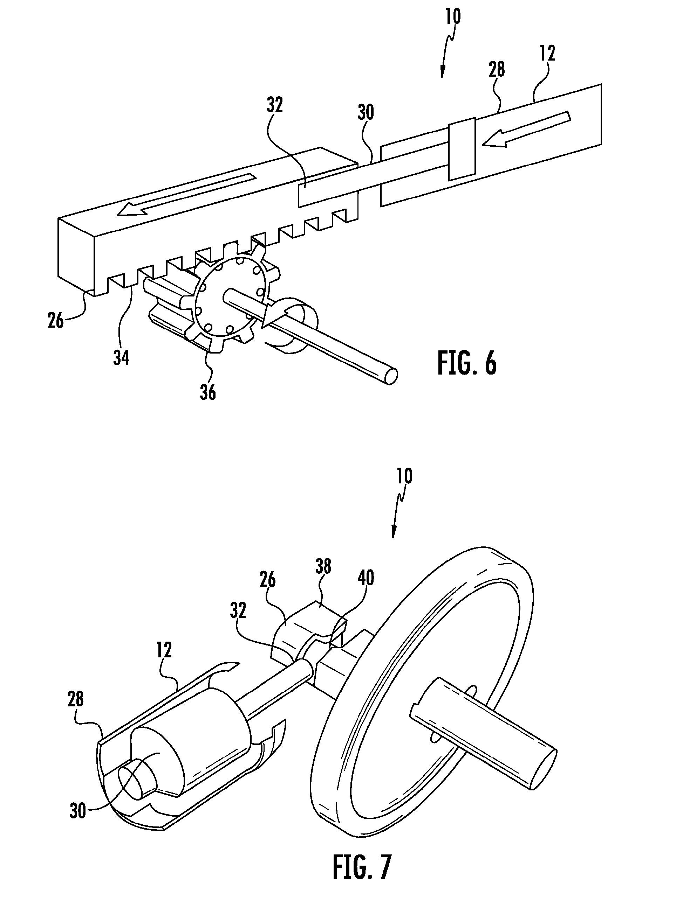

In other features, the active system 12 may comprise a translational movement design, such as where the active system 12 is a compressed spring, inflator, or other translational movement device. In these features, the translational movement of the active system 12 must be converted to rotational movement prior to coupling to the pivot location 18 and/ or 20 via a connector 26. For example, as shown in Figure 6, the active system 12 may comprise an inflator that generates gas pressure within a chamber 28, which in turn causes a piston 30 to translate out of the chamber 28. An end 32 of the piston 30 may be coupled to the connector 26, such as a linear actuator 34 or other type of device that provides translational movement, which is in turn coupled to a gear 36. The gear 36 may then in turn be coupled to the pivot location 18 and/or 22. The translational movement of the linear actuator 34 causes the coupled gear 36 to rotate, which in turn causes the pivot location 18 and/or 22 to rotate, resulting in an aft rotation of the seat back 16 and/or head rest 24.

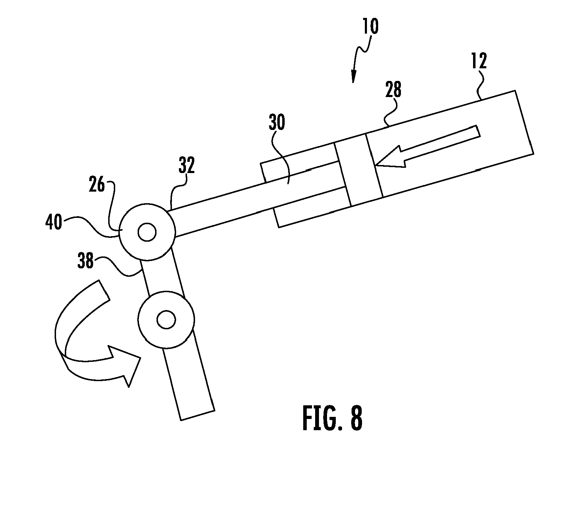

In other features, as illustrated in Figure 7, the end 32 of the piston 30 may be coupled to the connector 26, which may be a crankshaft 38. The crankshaft 38 may then in turn be coupled to the pivot location 18 and/or 22. The crankshaft 38 may comprise a bearing surface 40 having an axis that is offset from an axis of the crankshaft 38. The end 32 of the piston 30 may be coupled to the bearing surface 40. The crankshaft 38 may then in turn be coupled to the pivot location 18 and/or 22. The translational movement of the piston 30 presses against the bearing surface 40, which in turn causes the crankshaft 38 to rotate, as illustrated in Figure 8, which in turn causes the pivot location 18 and/or 22 to rotate, resulting in an aft rotation of the seat back 16 and/or head rest 24.

In certain features, the sensing circuit 14 may comprise integrated logic to monitor for crash scenarios and to transmit a signal to one or both active systems 12 when such a scenario is detected. When the active system 12 receives the signal from the sensing circuit 14, the active system 12 begins to move. The sensing circuit 14 may include a battery for reserve power and inflator firing charge capability. The sensing circuit 14 may be electrically connected to one or both active systems 12. For example, the sensing circuit 14 may be an electronics module assembly ("EMA") or other suitable electronics control module.

In use, when the sensing circuit 14 detects that a crash has occurred, the sensing circuit 14 sends a signal to the active system 12, which in turn causes the active system 12 to move. The active system 12 movement, through its coupling to the pivot location 18, thereby causes the seat back 16 to rotate aft so as to shorten the distance between a passenger's head and the seat back 16. The reduction in distance limits the amount of acceleration that a passenger's head may achieve before impacting the seat back 16, thus also reducing the highest spikes in acceleration.

In the features where the active system 12 is also coupled to the pivot location 22, the active system 12 movement also causes the head rest 24 to rotate aft which both further shortens the distance between the passenger's head and the seat back 16, as well as providing some additional cushioning to absorb at least a portion of the impact of the passenger's head. The additional reduction in distance, as well as the potential cushioning effect, may further limit the amount of acceleration that a passenger's head may achieve before impacting the seat back 16, thus potentially further reducing the highest spikes in acceleration.

Figure 9 illustrates head accelerations experienced on seat backs 16 having active seat backs 10 installed. As shown in Figure 9, the incorporation of the active seat backs 10 reduces the highest spikes in acceleration and also provides better control and predictability over the head acceleration values that would be experienced in the event of a minor crash. Furthermore, incorporation of the active seat 10 into seat backs 16 also reduces the allowable setback for non-contact installations.

The foregoing is provided for purposes of illustrating, explaining, and describing features of the present invention. Further modifications and adaptations to these features will be apparent to those skilled in the art and may be made without departing from the scope of the invention.

## Claims

1. An active, energy absorbing, seat back for a passenger seat comprising:
a) a seat back (16) comprising a first pivot location (18);
b) at least one active system (12) coupled to the pivot location;
and
c) at least one sensing circuit (14) electrically connected to the at least one active system and arranged to:
i) monitor for crash scenarios;
and
ii) transmit a signal to the at least one active system when such a scenario is detected.

2. The active seat back of claim 1, further comprising:
a) a head rest (24) coupled to the passenger seat back (16) and comprising a second pivot location (22);
and
b) the at least one active system coupled to the first (18) and/or second pivot locations.

3. The active seat back of claim 1 or claim 2, wherein:
a) the passenger seat back (16) is rotated aft;
or
b) the passenger seat back and the head rest (24) are rotated aft;
or
c) the head rest is rotated aft;
when the at least one active system (12) receives the signal from the at least one sensing circuit (14).

4. The active seat back of any of claims 1 to 3, wherein the at least one active system (12) is configured to provide translational movement.

5. The active seat back of any of claims 1 to 4, wherein the at least one active system (12) comprises:-
a) an inflator;
or
b) a pre-stress system;
or
c) a compressed spring;
or
d) an electric motor;
or
e) a pyrotechnic gas inflator;'
or
f) a cold gas inflator,

6. The active seat back of claim 4 or claim 5, wherein the at least one active system (12) is coupled to a connector (26) that is configured to convert the translational movement into rotational movement.

7. The active seat back of claim 6, wherein the connector comprises:
a) a crankshaft (38);
or
b) a linear actuator (34) and gear (36).

8. A method of deploying an active, energy absorbing, seat back in a passenger seat as claimed in any of claims 1 to 7, comprising:
a) sensing that a crash has occurred;
b) transmitting a signal to the at least one active system (12);
c) rotating the passenger seat back (16) aft;
or
d) rotating the passenger seat back (16) and the head rest (24) aft;
or
e) rotating the head rest (24) aft.
